# EUROPÄISCHE PATENTANMELDUNG

(11) **EP 4 610 103 A1**
(43) Veröffentlichungstag der Anmeldung: **03.09.2025**
(21) Anmeldenummer: 25156452.2
(22) Anmeldetag: 07.02.2025
(51) Int. Cl.: B60N 2/68, B60N 2/20, B60N 2/30, B60N 2/235, B60N 2/427, B60N 2/28

(54) **GURTGESTELL FÜR EINE FAHRZEUGSITZBANK**

(30) Priorität: 29.02.2024 DE 102024105859
(71) Anmelder: Aguti Produktentwicklung & Design GmbH, 88085 Langenargen (DE)
(72) Erfinder: Rogg, Christian, 88142 Wasserburg (DE)
(74) Vertreter: RavensPAT Patentanwälte Partnerschaft mbB

(57) **Zusammenfassung**

Gurtgestell (1), wobei das Gurtgestell einen Gurtgestellunterbau (2), eine Rückenlehne (4) und ein Sitzelement (3) aufweist, wobei der Gurtgestellunterbau Befestigungsmittel (11) zur Befestigung des Gurtgestellunterbaus an einem Fahrzeug aufweist, wobei die Rückenlehne (4) mittels einer Gelenkanordnung (5) am Gurtgestellunterbau (2) angeordnet ist, wobei das Sitzelement (3) mittels eines Gelenkmechanismus (6) an der Rückenlehne (4) angeordnet ist, wobei die Rückenlehne und das Sitzelement aus einer ersten Nutzposition in eine zweite Nutzposition relativ zum Gurtgestellunterbau (2) bewegbar sind, wobei in der ersten Nutzposition, mit horizontal gerichteter Rückenlehne (4), eine Fahrzeugsitzbankkonfiguration realisierbar ist, und wobei in der zweiten Nutzposition, mit vertikal gerichteter Rückenlehne (4), eine Fahrzeugsitzkonfiguration realisierbar ist.

## Beschreibung

Gurtgestelle für Fahrzeugsitze sind allgemein bekannt.

Insbesondere sind Gurtgestelle für Fahrzeugsitze bekannt, welche umbaubar vorhanden sind. Beispielsweise sind die Gurtgestelle derart umbaubar vorhanden, dass in einer Position der Gurtgestelle ein Sitz, z.B. ein Sofasitz oder eine Fahrzeugsitzbank, realisiert ist und in einer weiteren Position ein Fahrzeugsitz, welcher die rechtlichen Sicherheitsnormen erfüllt. Bei diesen bekannten Gurtgestellen ist meist die Sitzrichtung in der Fahrzeugsitzbankkonfiguration quer zu einer Fahrtrichtung des Fahrzeugs vorhanden, in welches das Gurtgestell eingebaut ist, und in der Fahrzeugsitzkonfiguration ist die Sitzrichtung in Fahrtrichtung ausgerichtet.

Nachteilig an den bekannten Gurtgestellen ist, dass zur Ausbildung des Fahrzeugsitz und/oder zur Ausbildung als Fahrzeugsitzbank Sitzkissen bewegt werden müssen. Hierbei ergibt sich bei bekannten Gurtgestellen häufig die Frage, wohin die Sitzkissen verräumt werden können, da z.B. ein Sitzkissen beim Umbau von der Fahrzeugsitzbankkonfiguration in die Fahrzeugsitzkonfiguration entfernt werden muss.

Hierdurch gibt es bei den bekannten Gurtgestellen ein Platzproblem, da sowohl in der Fahrzeugsitzbankkonfiguration Elemente des Fahrzeugsitzes, wie etwa Kissen oder Kopfstützen verstaut werden müssen, als auch in der Fahrzeugsitzkonfiguration.

### Aufgabe und Vorteile der Erfindung

Der Erfindung liegt die Aufgabe zugrunde, ein verbessertes Gurtgestell oder eine verbesserte Fahrzeugsitzbank mit einem Gurtgestell bereitzustellen, um einen zusätzlichen Fahrzeugsitz in einem Fahrzeug zu realisieren. Insbesondere eine verbessertes oder alternatives Gurtgestell einer Fahrzeugsitzbank zur Ausbildung eines Fahrzeugsitz bereitzustellen, wobei der mit dem Gurtgestell gebildet Fahrzeugsitz die rechtlichen Sicherheitsanforderungen für eine Zulassung als Fahrzeugsitz erfüllt.

Die Aufgabe wird durch die Merkmale des Anspruchs 1 gelöst.

In den abhängigen Ansprüchen sind vorteilhafte und zweckmäßige Ausführungsformen der Erfindung angegeben.

Es wird ein Gurtgestell für eine Fahrzeugsitzbank vorgeschlagen, wobei das Gurtgestell einen Gurtgestellunterbau, eine Rückenlehne und ein Sitzelement aufweist, wobei der Gurtgestellunterbau Befestigungsmittel zur Befestigung des Gurtgestellunterbaus an einem Fahrzeug aufweist, wobei die Rückenlehne mittels einer Gelenkanordnung am Gurtgestellunterbau angeordnet ist, wobei das Sitzelement mittels eines Gelenkmechanismus an der Rückenlehne angeordnet ist, wobei die Rückenlehne und das Sitzelement aus einer ersten Nutzposition in eine zweite Nutzposition relativ zum Gurtgestellunterbau bewegbar sind, wobei in der ersten Nutzposition eine Sitzbank der Fahrzeugsitzbank realisierbar ist, wobei in der zweiten Nutzposition ein Fahrzeugsitz der Fahrzeugsitzbank realisierbar ist. Hierdurch ist mit dem Gurtgestell eine vergleichsweise kompakte Fahrzeugsitzbank realisierbar, welche sich vergleichsweise einfach und platzsparend zu einem Fahrzeugsitz umwandeln lässt.

Beispielsweise befindet sich das Gurtgestell in der ersten Nutzposition in der sogenannten Fahrzeugsitzbankkonfiguration und in der zweiten Nutzposition in der sogenannten Fahrzeugsitzkonfiguration. Beispielsweise ist ein Sitzrichtung eines Nutzers in der Fahrzeugsitzkonfiguration verschieden zu einer Sitzrichtung des Nutzers in der Fahrzeugsitzbankkonfiguration.

Der Begriff "Sitzrichtung" ist bezogen auf eine sitzende Person zu verstehen, welchem in dem mit dem Gurtgestell gebildeten Fahrzeugsitz oder der mit dem Gurtgestell gebildeten Fahrzeugsitzbank Platz genommen hat. Hierbei ist eine Sitzrichtung in der Fahrzeugsitzbankkonfiguration von einer Sitzrichtung in der Fahrzeugsitzkonfiguration zu unterscheiden. Beispielsweise ist die Sitzrichtung in der Fahrzeugsitzbankkonfiguration quer, z.B. senkrecht, zur Sitzrichtung in der Fahrzeugsitzkonfiguration ausgerichtet.

Beispielsweise entspricht aufgrund der vorhandenen Sicherheitsvorgaben im angeordneten Zustand des Gurtgestells an einem Fahrzeug die Sitzrichtung der Fahrzeugsitzkonfiguration einer Fahrtrichtung des Fahrzeugs bei einer Vorwärtsbewegung.

Beispielsweise erfüllt der mit dem Gurtgestell ausbildbare Fahrzeugsitz die rechtlichen Sicherheitsnormen für Fahrzeugsitze in einem Fahrzeug, insbesondere die rechtlichen Sicherheitsnormen für Fahrzeugsitze in einem Wohnmobil. Die diesbezüglichen Sicherheitsnormen sind beispielsweise unter anderem durch die EU Verordnung (EU) 2019/2144 insbesondere in Verbindung mit den UN-Regelungen Nr. 14, Nr. 16 und Nr. 17 vorgegeben. Das Gurtgestell ist beispielsweise dazu ausgebildet, die für die Zulassung erforderlichen Sicherheitsnormen für Fahrzeugsitze im angeordneten Zustand am Fahrzeug zu erfüllen.

Beispielsweise ist der Gurtgestellunterbau mittels der Befestigungsmittel mit einem Fahrzeugrahmen und/oder einem Fahrzeugboden des Fahrzeugs verbindbar. Beispielsweise sind die Befestigungsmittel als Schrauben ausgebildet. Denkbar ist auch, dass der Gurtgestellunterbau entsprechende Gegenlager aufweist, um den Gurtgestellunterbau mit Schrauben am Fahrzeug zu befestigen.

Beispielsweise weist der Gurtgestellunterbau einen U-förmigen Abschnitt auf. Beispielsweise ist der U-förmige Abschnitt aus Vierkantrohren gebildet. Denkbar ist, dass der U-förmige Abschnitt eine Horizontalstrebe aufweist. Beispielsweise ist die Horizontalstrebe an einem Fahrzeugboden oder einem Fahrzeugrahmen anliegend am Fahrzeug anordenbar. Denkbar ist, dass die Horizontalstrebe Befestigungsmittel zur Befestigung des Gurtgestellunterbaus am Fahrzeug aufweist. Beispielsweise sind die Befestigungsmittel als Durchgangsbohrungen vorhanden.

Weiter vorstellbar ist, dass der U-förmige Abschnitt zwei Vertikalstreben aufweist, welche voneinander beabstandet an Enden der Horizontalstrebe in vertikaler Richtung nach oben abstehend an der Horizontalstrebe angeordnet sind. Beispielsweise sind die Vertikalstreben mit der Horizontalstrebe verschweißt oder unlösbar verbunden. Beispielsweise sind die Vertikalstreben mit einem ersten Ende mit der Horizontalstrebe verbunden und mit einem zweiten Ende mit der Rückenlehne verbunden. Beispielsweise ist das zweite Ende gegenüberliegend zum ersten Ende angeordnet und vom ersten Ende beabstandet vorhanden. Denkbar ist, dass am zweiten Ende der Vertikalstrebe die Gelenkanordnung angeordnet ist.

Beispielsweise weist der Gurtgestellunterbau einen Stützabschnitt in Form eines Stützfuß auf. Denkbar ist, dass der Stützfuß mit einem ersten Ende im Bereich des zweiten Endes der Vertikalstreben des Gurtgestellunterbaus an den Vertikalstreben angebunden ist und mit einem zweiten Ende, z.B. einem unteren Stützabschnitt-Ende, im Bereich des Fahrzeugbodens des Fahrzeugs mit dem Fahrzeug verbindbar ausgebildet ist. Zum Beispiel ist der Stützfuß im angeordneten Zustand am Fahrzeug in Fahrtrichtung schräg nach unten abstehend mit dem ersten Ende an der Vertikalstrebe angeordnet.

Vorstellbar ist auch, dass das Gurtgestell mit einer Fahrzeugseitenwand oder einer Fahrzeugsäule, welche sich im Bereich der Fahrzeugseitenwand befindet, verbindbar ausgebildet ist. Beispielsweise ist das Gurtgestell im angeordneten Zustand am Fahrzeug mit dem Fahrzeug verbunden. Z.B. ist das Gurtgestell im angeordneten Zustand am Fahrzeug mit dem Fahrzeugboden, mit dem Fahrzeugrahmen, mit der Fahrzeugseitenwand und/oder mit der Fahrzeugsäule verbunden.

Denkbar ist auch, dass der Gurtgestellunterbau kastenförmig ausgebildet ist. Beispielsweise ist eine Seite des kastenförmigen Gurtgestellunterbaus offen ausgebildet.

Beispielsweise weist die Rückenlehne einen rechteckigen oder rechteckförmigen Rückenlehnenrahmen auf. Beispielsweise ist der Rückenlehnenrahmen aus Vierkantrohren gebildet. Denkbar ist, dass der Rückenlehnenrahmen der Rückenlehne zwei Horizontalverbindungen und zwei Vertikalstützen aufweist. Beispielsweise sind die Horizontalverbindungen und die Vertikalstützen jeweils gegenüberliegend und voneinander beabstandet vorhanden. Beispielsweise sind die Horizontalverbindungen horizontal ausgerichtet vorhanden.

Denkbar ist, dass an der Rückenlehne Anbindungsmittel zur Montage einer Kopfstütze ausgebildet sind. Zum Beispiel sind an einer ersten Horizontalverbindung der Rückenlehne Anbindungsmittel zur Montage einer Kopfstütze ausgebildet. Beispielsweise sind die Anbindungsmittel als Durchgangsbohrungen an der Horizontalverbindung ausgebildet. Hierdurch ist eine Kopfstütze vergleichsweise einfach an die Rückenlehne anordenbar.

Zum Beispiel weisen die Vertikalstützen, z.B. horizontal, geschlitzte Abschnitte auf. Hierdurch kann eine gewünschte plastische Verformung der Rückenlehne vorgegeben werden, welche im Belastungsfall bei Überschreiten einer Grenz-Zugbelastung in Sitzrichtung in der Fahrzeugsitzkonfiguration stattfindet.

Beispielsweise sind an der zweiten Horizontalverbindung Montageelemente eines Isofix-Rückhaltessystems ausgebildet. Denkbar ist, dass an der zweiten Horizontalverbindung Halteklammern eines Isofix-Rückhaltesystems ausgebildet sind. Beispielsweise kann an den Halteklammern ein Isofix-Rückhaltesystem eines Kindersitzes eingerastet werden.

Weiter wird vorgeschlagen, dass an den Vertikalstützen und/oder an der zweiten Horizontalverbindung die Gelenkanordnung angeordnet ist. Beispielsweise ist der Gurtgestellunterbau mittels der Gelenkanordnung mit den Vertikalstützen und/oder der zweiten Horizontalverbindung verbunden. Zum Beispiel ist eine Vertikalstrebe mittels der Gelenkanordnung mit einer Vertikalstütze gelenkig verbunden.

Beispielsweise weist die Gelenkanordnung eine Gelenkachse auf. Vorstellbar ist auch, dass der Gelenkmechanismus eine Drehachse aufweist. Beispielsweise ist die Vertikalstütze oder sind die Vertikalstützen um die Gelenkachse der Gelenkanordnung drehbar vorhanden.

Auch wird vorgeschlagen, dass die Gelenkanordnung einen Verriegelungsmechanismus aufweist, um die Rückenlehne in der ersten und/oder in der zweiten Nutzposition festzulegen. Zum Beispiel ist der Verriegelungsmechanismus als ein Rastbeschlag ausgebildet. Hierdurch ist ein Verstellen der Rückenlehne von der ersten in die zweite Nutzposition und umgekehrt für einen Nutzer vergleichsweise einfach realisierbar.

Beispielsweise erstrecken sich die Vertikalstützen, die erste Horizontalverbindung und die zweite Horizontalverbindung jeweils entlang einer Längsachse. Denkbar ist, dass die Längsachsen der Vertikalstützen, der ersten und zweiten Horizontalverbindung sich entlang einer Rückenlehnenebene erstrecken. Beispielsweise spannen die Längsachsen der Vertikalstützen, der ersten und der zweiten Horizontalverbindung die Rückenlehnenebene auf.

Beispielsweise ist die Rückenlehnenebene in der ersten Nutzposition horizontal ausgerichtet vorhanden, d.h. die Rückenlehnenebene erstreckt sich entlang einer Horizontalebene. Hierdurch ist beispielsweise eine Sitzfläche für die Fahrzeugsitzbank in der Fahrzeugsitzbankkonfiguration realisiert.

Außerdem wird vorgeschlagen, dass die Gelenkanordnung eine Gelenkachse aufweist, um welche die Rückenlehne drehbar vorhanden ist, wobei der Gelenkmechanismus eine Drehachse aufweist, um welche das Sitzelement drehbar vorhanden ist, wobei die Drehachse von der Gelenkachse beabstandet ist. Hierdurch ist das Sitzelement zusammen mit der Rückenlehne bewegbar. Denkbar ist, dass die Bewegungen der Rückenlehne und des Sitzelements nicht synchron ablaufen.

Auch wird vorgeschlagen, dass die Drehachse des Gelenkmechanismus um die Gelenkachse der Gelenkanordnung drehbar vorhanden ist. Hierdurch ist das Gurtgestell vergleichsweise einfach aufgebaut.

Beispielsweise erstreckt sich die Gelenkachse der Gelenkanordnung und die Drehachse des Gelenkmechanismus entlang oder parallel zur Längsachse der ersten Horizontalverbindung. Zum Beispiel erstreckt sich die Gelenkachse der Gelenkanordnung und die Drehachse des Gelenkmechanismus entlang oder parallel zur Längsachse der zweiten Horizontalverbindung. Denkbar ist auch, dass die Gelenkachse und/oder die Drehachse sich entlang einer Längsachse der Horizontalstrebe des Gurtgestellunterbaus erstrecken oder zur Längsachse der Horizontalstrebe parallel ausgerichtet sind.

Beispielsweise fallen die Gelenkachse der Gelenkanordnung und die Längsachse der zweiten Horizontalverbindung aufeinander. Vorstellbar ist, dass bei einer Bewegung der Rückenlehne aus der ersten Nutzposition in die zweite Nutzposition die Gelenkachse unveränderlich, z.B. positionsfest, vorhanden ist.

Beispielsweise ist das Gurtgestell ausgebildet, dass bei einer Bewegung der Rückenlehne aus der ersten Nutzposition in die zweite Nutzposition die Drehachse entlang eines Kreisbogenabschnitts um die Gelenkachse bewegt wird.

Zum Beispiel wird bei einer Bewegung der Rückenlehne der an der Rückenlehne angeordnete Gelenkmechanismus mitbewegt. Beispielsweise wird der Gelenkmechanismus entlang eines Kreisbogenabschnitts um die Gelenkachse der Gelenkanordnung bei einer Bewegung der Rückenlehne gedreht. Vorstellbar ist, dass bei einer Drehbewegung der Rückenlehne um die Gelenkachse der Gelenkanordnung der Gelenkmechanismus mitbewegt wird.

Zum Beispiel erstreckt sich die Drehachse parallel zur Gelenkachse. Beispielsweise ist die Drehachse in einer Richtung quer oder senkrecht zur Drehachsenerstreckung beabstandet zur Gelenkachse vorhanden. Beispielsweise ist die Drehachse in einer Richtung entlang oder parallel zu einer Längsachse einer der Vertikalstreben von der Gelenkachse beabstandet vorhanden.

Ebenfalls wird vorgeschlagen, dass an der Rückenlehne ein Element eines Gurtrückhaltesystems angeordnet ist. Hierdurch ist ein Fahrzeugsitz realisierbar, welcher den Sicherheitsanforderungen an einen Fahrzeugsitz in einem Fahrzeug entspricht.

Beispielsweise ist ein Element des Gurtrückhaltesystems als ein Gurt, als ein Gurtumlenker, als ein Gurtaufroller und/oder als ein Gurtschloss ausgebildet. Zum Beispiel ist das Gurtrückhaltesystem als eine Sicherheitsgurtanordnung eines Fahrzeugs ausgebildet. Denkbar ist, dass das Gurtrückhaltesystem als ein Dreipunktgurtsystem, als ein Vierpunktgurtsystem und/oder als ein Mehrpunktgurtsystem ausgebildet ist. Vorgeschlagen wird, dass an der Rückenlehne, z.B. an der ersten Horizontalverbindung, ein Gurtumlenker angeordnet ist. Vorstellbar ist auch, dass am Gurtgestellunterbau ein weiteres Element des Gurtrückhaltesystems angeordnet ist, z.B. ein Gurtaufroller. Denkbar ist auch, dass am Gurtgestellunterbau ein Gurtschloss angebracht ist.

Auch wird vorgeschlagen, dass an einer ersten Seite der Rückenlehne ein Sitzkissen der Fahrzeugsitzbank befestigt ist, wobei an einer zweiten Seite der Rückenlehne ein Lehnenpolster angeordnet ist. Hierdurch ist das Gurtgestell vergleichsweise einfach ausgebildet. Insbesondere ist hierdurch ein Fahrzeugsitz bzw. eine Fahrzeugsitzbank, welche mit dem Gurtgestell gebildet wird, vergleichsweise platzsparend ausgebildet.

Beispielsweise ist die erste Seite der Rückenlehne gegenüberliegend und beabstandet zur zweiten Seite der Rückenlehne vorhanden. Beispielsweise ist das Sitzkissen der Fahrzeugsitzbank lösbar oder unlösbar mit der Rückenlehne verbunden. Beispielsweise ist das Lehnenpolster lösbar oder unlösbar mit der Rückenlehne verbunden. Denkbar ist, dass das Sitzkissen der Fahrzeugsitzbank und/oder das Lehnenpolster mittels einer Klettverbindung an der Rückenlehne lösbar festgelegt ist. Beispielsweise sind das Sitzkissen und das Lehnenpolster über eine Breite des Rückenlehnenrahmen voneinander beabstandet vorhanden.

Beispielsweise ist eine Sitzfläche des Sitzkissens größer, als eine Anlehnfläche des Lehnenpolsters. Beispielsweise erstreckt sich die Sitzfläche des Sitzkissens und/oder die Anlehnfläche des Lehnenpolsters parallel zur Rückenlehnenebene. Denkbar ist, dass die Sitzfläche des Sitzkissens in einer Längenerstreckung größer ist, als eine Erstreckung der Vertikalstützen in Längsrichtung entlang ihrer Längsachsen, wobei die Längenerstreckung der Sitzfläche parallel zur Längsrichtung der Längsachsen der Vertikalstützen ausgerichtet ist. Vorstellbar ist auch, dass eine Erstreckung der Sitzfläche des Sitzkissens in Breitenrichtung der Sitzfläche des Sitzkissens größer ist, als eine Erstreckung einer Horizontalverbindung entlang der Längsachse der Horizontalverbindung oder größer ist, als eine Erstreckung der Anlehnfläche des Lehnenpolsters in Breitenrichtung. Beispielsweise sind die Längserstreckung und die Breitenerstreckung des Sitzkissens quer, z.B. senkrecht, zueinander ausgerichtet. Hierdurch ist eine vergleichsweise große Sitzfläche der Fahrzeugsitzbank realisierbar.

Ebenfalls wird vorgeschlagen, dass an der Rückenlehne ein Anschlagelement vorhanden ist, wobei das Sitzelement in einer Fahrzeugsitzposition am Anschlagelement ansteht. Hierdurch ist vergleichsweise einfach ein Sitzwinkel des Sitzelements einstellbar, welcher durch gesetzliche Normen für einen Fahrzeugsitz vorgegeben ist.

Beispielsweise wird durch eine Bewegung der Rückenlehne aus der ersten Nutzposition in die zweite Nutzposition das Sitzelement bewegt, z.B. mitbewegt. Beispielsweise ist eine Sitzfläche des Sitzelements in der ersten Nutzposition des Gurtgestells horizontal ausgerichtet vorhanden. Zum Beispiel ist die Sitzfläche des Sitzelements in der zweiten Nutzposition des Gurtgestells zur horizontalen Ebene angewinkelt ausgerichtet. Denkbar ist, dass die Sitzfläche des Sitzelements in der Fahrzeugsitzposition mit der horizontalen Ebene einen Winkel größer 0° einschließt. Beispielsweise schließt die Sitzfläche des Sitzelements in der Fahrzeugsitzposition mit der horizontalen Ebene einen Winkel zwischen 3° und 10°, zwischen 4° und 8° oder zwischen 5° und 7° ein. Z.B. ist der Winkel, welcher die Sitzfläche des Sitzelements mit der horizontalen Ebene einschließt 3°, 4°, 5°, 7° oder 8°, insbesondere 6°.

Beispielsweise steht das Sitzelement mit einer Unterseite in der zweiten Nutzposition an einem Anschlag des Anschlagelements an. Hierdurch ist vergleichsweise einfach ein insbesonderer maximaler Winkel zwischen der Sitzfläche des Sitzelements und der Anlehnfläche des Lehnenpolsters vorgebbar.

Beispielsweise ist das Sitzelement mittels des Gelenkmechanismus, beispielsweise frei drehbeweglich, an der Rückenlehne angeordnet. Hierdurch ist vergleichsweise einfach ein Zugang zu einem Volumen am Gurtgestellunterbau freigebbar, indem in der zweiten Nutzposition des Sitzelement um die Drehachse von einem Nutzer in Richtung Rückenlehne drehbar ist. Beispielsweise ist das Anschlagelement derart ausgebildet, dass das Sitzelement bei einer Bewegung des Rückenlehnenelements von der zweiten Nutzposition in die erste Nutzposition am Anschlagelement zu anstehen kommt und anschließend mitbewegt wird. Zum Beispiel steht das Sitzelement in der zweiten Nutzposition des Gurtgestells nicht am Anschlagelement an.

Weiter wird vorgeschlagen, dass in der ersten Nutzposition das Lehnenpolster der Rückenlehne am Sitzelement ansteht. Hierdurch ist in der ersten Nutzposition ein vergleichsweise kompaktes und platzsparendes Gurtgestell realisiert.

Beispielsweise steht in der ersten Nutzposition die Lehnenfläche des Lehnenpolsters an der Sitzfläche des Sitzelements an. Beispielsweise ist in der ersten Nutzposition die Lehnenfläche parallel zur Sitzfläche des Sitzelements vorhanden. Beispielsweise steht das Sitzelement in der ersten Nutzposition an einem Stützelement des Gurtgestells oder einem Stützelement der Fahrzeugsitzbank an. Beispielsweise liegt das Sitzelement in der ersten Nutzposition auf einem Stützelement des Gurtgestells oder einem Stützelement der Fahrzeugsitzbank auf.

Außerdem wird ein Fahrzeugsitz mit einem Gurtgestell nach einer der vorangegangen aufgeführten Ausführungen oder eine Fahrzeugsitzbank mit einem Gurtgestell nach einer der vorangegangen aufgeführten Ausführungen vorgeschlagen. Beispielsweise ist der Fahrzeugsitz oder die Fahrzeugsitzbank als ein Wohnmobilfahrzeugsitz, ein Reisemobilfahrzeugsitz, ein Wohnwagenfahrzeugsitz und/oder ein Caravanfahrzeugsitz ausgebildet.

Außerdem wird vorgeschlagen, dass die Fahrzeugsitzbank ein Rückenlehnensitzpolster aufweist, wobei das Rückenlehnensitzpolster in der ersten Nutzposition mit dem Sitzkissen eine Polsterung der Sitzbank bilden. Hierdurch ist vergleichsweise einfach in der zweiten Nutzposition des Gurtgestells eine Fahrzeugsitzbank mit Rückenlehnenpolster realisiert.

Beispielsweise ist das Rückenlehnensitzpolster relativ zum Gurtuntergestell positionsfest vorhanden. Denkbar ist, dass das Rückenlehnensitzpolster ausgebildet ist, am Fahrzeug, z.B. einer Fahrzeugwand oder einer Fahrzeugsäule angebracht zu werden. Vorstellbar ist jedoch auch, dass das Rückenlehnensitzpolster am Gurtgestell und/oder einem Stützelement der Fahrzeugsitzbank angeordnet ist.

Beispielsweise ist das Stützelement der Fahrzeugsitzbank als ein z.B. kastenförmiger Unterbau der Fahrzeugsitzbank ausgebildet. Beispielsweise umschließt der Unterbau den Gurtgestellunterbau zumindest abschnittsweise.

Als weitere denkbare Ausführungsvariante wird ein Fahrzeug, insbesondere Wohnmobil, mit einem Gurtgestell nach einer der vorangegangen genannten Ausführungsvarianten oder mit einem Fahrzeugsitz oder einer Fahrzeugsitzbank nach den vorangegangen genannten Ausführungsformen vorgeschlagen.

### Figurenbeschreibung

Weitere Merkmale und Vorteile der Erfindung sind anhand schematisch gezeigter Ausführungsbeispiele näher erläutert.

Im Einzelnen zeigt:
- Figur 1: ein Gurtgestell in einer Fahrzeugsitzkonfiguration in einer perspektivischen Ansicht von schräg seitlich vorne oben,
- Figur 2: das Gurtgestell gemäß Figur 1 in einer Fahrzeugsitzbankkonfiguration in der perspektivischen Ansicht von schräg seitlich oben,
- Figur 3: eine seitliche Ansicht auf ein Gurtgestell in einer Fahrzeugsitzkonfiguration,
- Figur 4: eine perspektivische Ansicht von schräg seitlich oben vorne auf das Gurtgestell gemäß Figur 3,
- Figur 5: eine Frontansicht auf das Gurtgestell gemäß Figur 3 und
- Figur 6: eine Ansicht von schräg seitlich hinten auf ein Gurtgestell in einer Fahrzeugsitzbankkonfiguration.

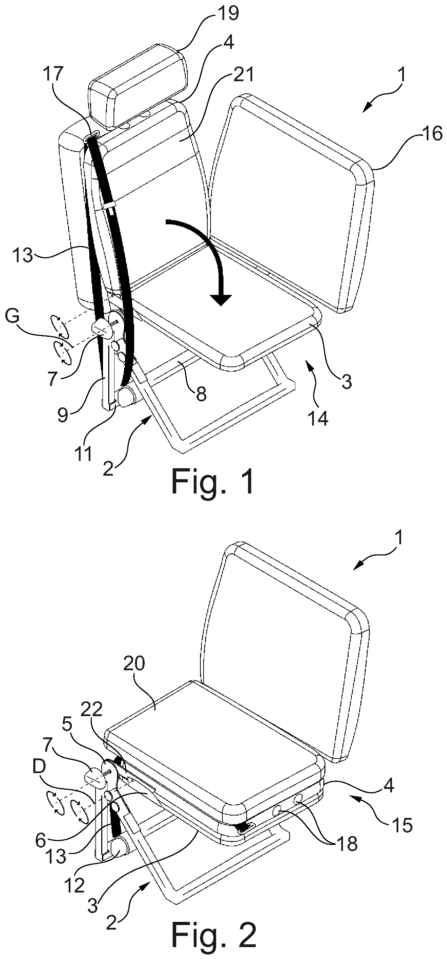

Figuren 1 und 2 zeigen ein Gurtgestell 1, wobei in Figur 1 das Gurtgestell 1 in der Fahrzeugsitzkonfiguration und in Figur 2 in der Fahrzeugsitzbankkonfiguration dargestellt ist. In Figur 1 ist damit ein mit dem Gurtgestell gebildeter Fahrzeugsitz 14 gezeigt und in Figur 2 eine mit dem Gurtgestell gebildete Fahrzeugsitzbank 15.

Das Gurtgestell 1 weist einen Gurtgestellunterbau 2, ein Sitzelement 3 und eine Rückenlehne 4 auf. Beispielsweise ist die Rückenlehne 4 mittels einer Gelenkanordnung 5 am Gurtgestellunterbau 2 beweglich angeordnet. Zum Beispiel ist das Sitzelement 3 mittels eines Gelenkmechanismus 6 beweglich an der Rückenlehne 4 angeordnet.

Die Gelenkanordnung 5 weist eine Gelenkachse G auf, um welche die Rückenlehne 4 relativ zum Gurtgestellunterbau 2 drehbar vorhanden ist. Der Gelenkmechanismus 6 weist eine Drehachse D auf, um welche das Sitzelement 3 relativ zur Rückenlehne 4 drehbar vorhanden ist.

An der Gelenkanordnung 5 kann eine Verriegelung 7, z.B. in Form eines Rastbeschlags, ausgebildet sein.

Der Gurtgestellunterbau 2 weist beispielsweise eine Horizontalstrebe 8 und zwei Vertikalstreben 9, 10 auf. Denkbar ist, dass an der Horizontalstrebe 8 Befestigungsmittel 11 zur Befestigung des Gurtgestells 1 an einem Fahrzeug (in Figuren 1 und 2 nicht gezeigt) ausgebildet sind. Beispielsweise ist am Gurtgestellunterbau 2 auch ein Gurtaufroller 12 eines Gurtrückhaltesystems angeordnet. Beispielsweise ist am Gurtaufroller 12 ein Gurt 13 des Gurtrückhaltesystems angeordnet.

Das Gurtgestell 1 kann ein Rückenlehnensitzpolster 16 aufweisen. Das Rückenlehnensitzpolster 16 weist eine Anlehnfläche auf, an welcher ein Nutzer mit dem Rücken anlehnen kann, wenn ist als eine Fahrzeugsitzbankrückenlehne der Fahrzeugsitzbank 15 in der Fahrzeugsitzbankkonfiguration des Gurtgestell 1 ausgebildet.

An der Rückenlehne 4 ist beispielsweise ein Gurtumlenker 17 angeordnet, um den Gurt 13 umzulenken. Ebenfalls kann das Gurtgestell 1 an der Rückenlehne 4 Anbindungsmittel in Form von Stecköffnungen 18 aufweisen, um einen Kopfstütze 19 an der Rückenlehne 4 anzuordnen.

Beispielsweise ist an einer ersten Seite der Rückenlehne 4 ein Sitzkissen 20 befestigt. Das Sitzkissen 20 ist beispielsweise als ein Sitzkissen für die Fahrzeugsitzbank 15 ausgebildet. An einer zweiten Seite der Rückenlehne 4 ist beispielsweise ein Lehnenpolster 21 angeordnet.

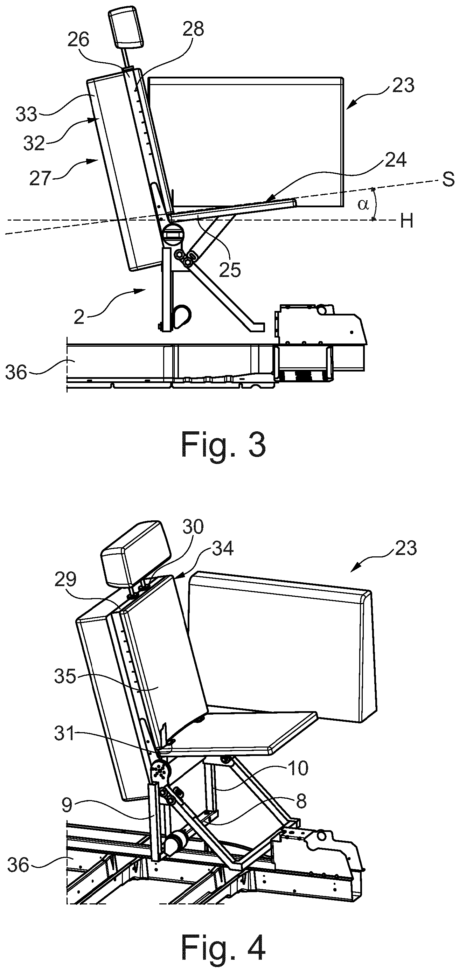

In den Figuren 3 bis 5 ist eine weitere Variante eines Gurtgestells 23 gezeigt. Das Gurtgestell 23 weist beispielsweise einen zum Gurtgestell 1 identischen Gurtgestellunterbau 2 auf. Vorstellbar ist, dass sich das Gurtgestell 23 gemäß der Figuren 3 bis 5 einzig durch die Ausgestaltung der verschiedenen Polster von dem Gurtgestell 1 gemäß der Figuren 1 und 2 unterscheidet.

In Figur 3 gezeigt ist, dass eine Sitzfläche 24 (S) des Sitzelements 25 einen Winkel α zu einer horizontal ausgerichteten Ebene H aufweist. Ebenfalls in Figur 3 gezeigt ist, dass eine Vertikalstrebe 26 der Rückenlehne 27 geschlitzte Abschnitte 28 aufweisen kann.

Denkbar ist, dass an der Rückenlehne 4 ein Anschlagelement 22 angeordnet ist. Beispielsweise weist das Anschlagelement 22 einen Anschlag oder eine Anschlagfläche auf, an welcher das Sitzelement 3 in der Fahrzeugsitzkonfiguration ansteht, sodass ein Winkel α größer 0° zwischen einer Ebene S der Sitzfläche 24 und der horizontal ausgerichteten Ebene H ausgebildet ist.

In Figur 4 ist gezeigt, dass an einer Horizontalverbindung 29 die Stecköffnungen 18 bzw. 30 ausgebildet sein können. Auch ist in Figur 4 gezeigt, dass an der Rückenlehne 27 Halteklammern 31 für ein Isofix-Rückhaltesystem ausgebildet sein können.

Ebenfalls in den Figuren 3 und 4 gezeigt ist, dass eine Sitzfläche 32 des Sitzkissens 33 größer ausgebildet sein kann, als eine Anlehnfläche 34 des Lehnenpolsters 35.

Ebenfalls ist aus den Figuren 3 bis 6 ersichtlich, dass das Gurtgestell 23, 37 an einem Fahrzeugrahmen 36 eines Fahrzeugs montierbar ist.

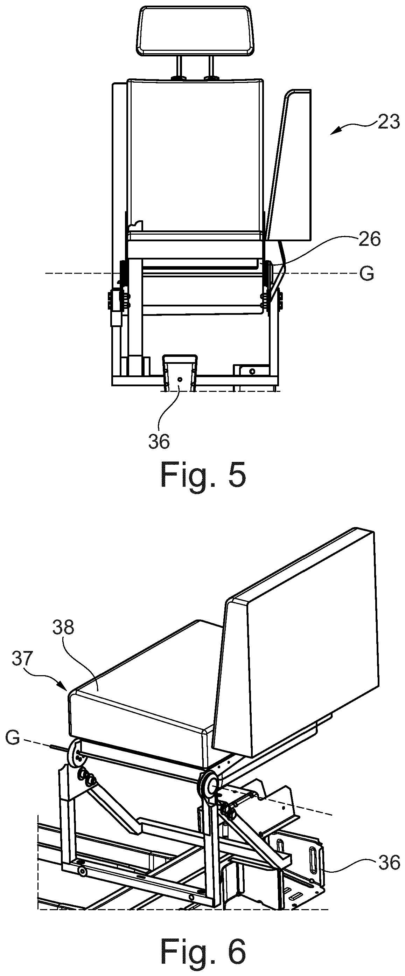

In Figur 6 ist ein weiteres Gurtgestell 37 gezeigt. Das Gurtgestell 37 gemäß Figur 6 unterscheidet sich beispielsweise nur in der Ausgestaltung der Sitzpolster, beispielsweise des an der Rückenlehne angeordneten Sitzkissens 38 von den Gurtgestellen 1 gemäß Figuren 1 und 2 und 23 gemäß Figuren 3 bis 5.

### Bezugszeichenliste

| | | | |
|---|---|---|---|
| 1 | Gurtgestell | 36 | Fahrzeugrahmen |
| 2 | Gurtgestellunterbau | 37 | Gurtgestell |
| 3 | Sitzelement | 38 | Sitzkissen |
| 4 | Rückenlehne | | |
| 5 | Gelenkanordnung | | |
| 6 | Gelenkmechanismus | | |
| 7 | Verriegelung | | |
| 8 | Horizontalstrebe | | |
| 9 | Vertikalstrebe | | |
| 10 | Vertikalstrebe | | |
| 11 | Befestigungsmittel | | |
| 12 | Gurtaufroller | | |
| 13 | Gurt | | |
| 14 | Fahrzeugsitz | | |
| 15 | Fahrzeugsitzbank | | |
| 16 | Rückenlehnensitzpolster | | |
| 17 | Gurtumlenker | | |
| 18 | Stecköffnung | | |
| 19 | Kopfstütze | | |
| 20 | Sitzkissen | | |
| 21 | Lehnenpolster | | |
| 22 | Anschlagelement | | |
| 23 | Gurtgestell | | |
| 24 | Sitzfläche | | |
| 25 | Sitzelements | | |
| 26 | Vertikalstrebe | | |
| 27 | Rückenlehne | | |
| 28 | Abschnitte | | |
| 29 | Horizontalverbindung | | |
| 30 | Stecköffnung | | |
| 31 | Halteklammer | | |
| 32 | Sitzfläche | | |
| 33 | Sitzkissen | | |
| 34 | Anlehnfläche | | |
| 35 | Lehnenpolster | | |

## Patentansprüche

1. Gurtgestell (1) für eine Fahrzeugsitzbank (15), wobei das Gurtgestell (1) einen Gurtgestellunterbau (2), eine Rückenlehne (4) und ein Sitzelement (3) aufweist, wobei der Gurtgestellunterbau (2) Befestigungsmittel (11) zur Befestigung des Gurtgestellunterbaus (2) an einem Fahrzeug aufweist, wobei die Rückenlehne (4) mittels einer Gelenkanordnung (5) am Gurtgestellunterbau (2) angeordnet ist, wobei das Sitzelement (3) mittels eines Gelenkmechanismus (6) an der Rückenlehne (4) angeordnet ist, wobei die Rückenlehne (4) und das Sitzelement (3) aus einer ersten Nutzposition in eine zweite Nutzposition relativ zum Gurtgestellunterbau (2) bewegbar sind, wobei in der ersten Nutzposition eine Sitzbank der Fahrzeugsitzbank (15) realisierbar ist, wobei in der zweiten Nutzposition ein Fahrzeugsitz (14) der Fahrzeugsitzbank (15) realisierbar ist.

2. Gurtgestell (1) nach dem vorangegangenen Anspruch 1, **dadurch gekennzeichnet, dass** die Gelenkanordnung (5) eine Gelenkachse aufweist, um welche die Rückenlehne (4) drehbar vorhanden ist, wobei der Gelenkmechanismus (6) eine Drehachse aufweist, um welche das Sitzelement (3) drehbar vorhanden ist, wobei die Drehachse von der Gelenkachse beabstandet ist.

3. Gurtgestell (1) nach einem der vorangegangenen Ansprüche,
**dadurch gekennzeichnet, dass** die Drehachse des Gelenkmechanismus (6) um die Gelenkachse der Gelenkanordnung (5) drehbar vorhanden ist.

4. Gurtgestell (1) nach einem der vorangegangenen Ansprüche,
**dadurch gekennzeichnet, dass** an der Rückenlehne (4) ein Element (17) eines Gurtrückhaltesystems angeordnet ist.

5. Gurtgestell (1) nach einem der vorangegangenen Ansprüche,
**dadurch gekennzeichnet, dass** an einer ersten Seite der Rückenlehne (4) ein Sitzkissen (20) der Fahrzeugsitzbank (15) befestigt ist, wobei an einer zweiten Seite der Rückenlehne (4) ein Lehnenpolster (21) angeordnet ist.

6. Gurtgestell (1) nach einem der vorangegangenen Ansprüche,
**dadurch gekennzeichnet, dass** an der Rückenlehne (4) ein Anschlagelement (22) vorhanden ist, wobei das Sitzelement (3) in einer Fahrzeugsitzposition am Anschlagelement (22) ansteht.

7. Gurtgestell (1) nach einem der vorangegangenen Ansprüche,
**dadurch gekennzeichnet, dass** in der ersten Nutzposition das Lehnenpolster (21) der Rückenlehne (4) am Sitzelement (3) ansteht.

8. Fahrzeugsitzbank (15), wobei die Fahrzeugsitzbank (15) ein Gurtgestell (1) nach einem der vorangegangenen Ansprüche aufweist.

9. Fahrzeugsitzbank (15) nach dem vorangegangenen Anspruch 8,
**dadurch gekennzeichnet, dass** die Fahrzeugsitzbank (15) ein Rückenlehnensitzpolster (16) aufweist, wobei das Rückenlehnensitzpolster (16) in der ersten Nutzposition mit dem Sitzkissen (20) eine Polsterung der Fahrzeugsitzbank (15) bilden.

10. Fahrzeug, insbesondere Wohnmobil, mit einer Fahrzeugsitzbank (15) nach einem der vorangegangenen Ansprüche 1 bis 7 oder einem Gurtgestell (1) nach einem der vorangegangenen Ansprüche 8 oder 9.
